# EUROPEAN PATENT APPLICATION

(11) **EP 2 299 105 A1**
(43) Date of publication of application: **23.03.2011**
(21) Application number: 09014163.1
(22) Date of filing: 12.11.2009
(51) Int. Cl.: F02N 15/02, F16D 41/06

(54) **Torque transmission system and free wheel with rollers and cage with integrated springs**

(30) Priority: 02.09.2009 BR 0902565
(71) Applicant: ZEN SA INDUSTRIA METALURGICA, 88355 100 Brusque SC (BR)
(72) Inventor: Zen, Nelson, 88.355-100 Brusque Santa Catarina (BR)
(74) Representative: Lorente Berges, Ana

(57) **Abstract**

The present invention refers to the technical field of starting impeller devices in general, more specifically a cage with integrated springs as applied to a torque transmission system and free wheel with rollers as applied to starter drives in starting devices and similar. The invention presents a cage (1) with integrated springs (1A) made in one single part of plastic, steel or other material, which has been especially developed to reduce the quantity of parts, facilitate the assembly and reduce the costs of the final product.

## Description

### Presentation

The present invention refers to the technical field of starter drives in general, more specifically a cage with integrated springs as applied to a torque transmission system and free wheel with rollers as applied to starter drives in starter motors and similar. The invention presents, as a novelty, a cage with integrated springs made in one single part of plastic, steel or other material, which has been especially developed to reduce the quantity of parts, facilitate the assembly and reduce the costs of the final product.

### Background

Internal combustion engines require an auxiliary starting system to start their operation. These engines require minimum rotation and duration depending on the engine assembly, temperature and other parameters.

There are manual or automatic starting systems in the state of the art. In case of automatic starting systems, the electrical starting system is the most widely used and characterized by using the starter motor.

Practically all vehicles and devices with combustion engines have a starter motor. This is composed by two parts, an electrical and a mechanical part. The electrical part is basically formed by a solenoid and an armature. The mechanical part is represented by the body, the shift lever and the starter drive.

The starter drive has the primary function to transmit torque from the electrical motor to the internal combustion engine. This torque is limited by the assembly configuration of the starter drive and materials used.

Combustion engines have a minimum rotation system for operation called idle speed, which is at least twice the starting rotation. For this condition, the starter drive has a secondary function called free wheel, which is extremely important to avoid the over-rotation of the starter motor.

After the start of operation of the combustion engine, the starting rotation increases to a higher rotation, minimally reaching the idle speed figure. This rotation increase, due to the high transmission ratio between the combustion engine and the starter motor, if free wheel were not used, would generate extremely high rotations to the armature, causing damaged to the armatureshaft (commutator centrifugation, warping and other) and/or other internal parts.

Automobile industry sectors now require more and more from their suppliers products having longer working life at lower prices. Therefore, their suppliers look for new technology to be more competitive than their competition.

### State of the art

Starter drives with free wheel systems are already known in the market, such as: roller-shell system, multi-disc clutch, ratchet and sprags.

In the light duty drives, i. e. as used in motors with few cylinders, the free wheel system with rollers is most commonly used, as indicated by the patent US 5722521. Roller starter parts have critical dimensions and much restricted tolerance ranges, thus increasing manufacturing and assembly costs.

These starter drives are disangaged whenever the sense of rotation is such that the relative speed between the internal raceand the external cam allows rollers to be moved against the springs, getting away from locking wedges.

Internal springs are usually helicoidally shaped, with circular or rectangular cross section, and are responsible to make rollers return to their contact position with the internal race and the external pocket. Under this condition, the system is ready to transmit locking torque to allow the start of the combustion engine.

A plastic or cold formed cage guarantees the appropriate position of springs.

### Featured enhancements

The new system dismisses the use of independent springs and cages as applied in the current state of the art and offers a much simpler and more efficient solution to facilitate the manufacture, assembly and reduce final costs.

### Disclosure of the Invention

The present invention consists of a device as applied to torque transmission systems and free wheel with rollers, preferably used in starter drives, being the device a cage with integrated springs made in a single part of plastic, steel or other material, provided with a ring with wavy external edges fitting in internal walls of the cam and internal edges serving as basis for roller movement. On the upper part of the ring, a set of prolongers, each one with a fixed support column provided with a cavity to fit in rollers and an elastic curved wall or flexure spring to force rollers to return.

The cage adds the functions of guide, support and spring in one single device, with no loss of quality, but rather providing practicality and economy.

Embodiments of the cage with springs integrating one single part may have various sizes, shapes and materials, to meet or adapt to any model of starter drive, but always keeping the same characteristics of the present invention.

Flexure springs have the same function of helicoidal springs as used in the state of the art, being positioned in contact with rollers to guarantee the required contact to transmit starting torque. Measurements of the cage guarantee that the integrated flexure springs supply equivalent forces to those made available in the systems of the state of the art.

### Description of operation

The present invention operates from turning a starting key on the combustion engine. The starting key energizes the solenoid, a part responsible to promote the engagement of the starter drive to the ring gear of the combustion engine. After the activation of the solenoid, the armature rotates the starter drive.

Starter drive rollers are always forced by the integrated springs to remain in the contact position with the internal race of the pinion and camprofile.

In cases where the rotation of the armature is higher than the pinion rotation, the external involving part of the starter drive rotates with coupled rollers, which transmit the torque of the electrical motor to the combustion engine.

The combustion engine starts its operation by increasing its rotation and consequently increasing the rotation of the starter drive to high values. When the rotation of the pinion is higher than the rotation of the armature, the system starts operating in free wheel for its protection. Cam profile forces rollers against the springs, allowing the pinion to rotate under higher rotation than the armature.

Once the engine has started operation, the driver ends the starting procedure by turning the starting key to a neutral position. On that moment, the solenoid current is turned off, causing the retraction of the starter drive. Therefore, the pinion is disangaged from the ring gear.

### Brief description of drawings

Objects, advantages and further important characteristics of the invention at issue may be more easily understood when read jointly with the attached figures, wherein:
Figure 1 shows an exploded view of the cage with integrated springs and other components composing the torque transmission system and free wheel with rollers for starter drives.
Figure 2 shows an upper cut view of the cage with integrated springs applied to a torque transmission system and free wheel with rollers.
Figure 3 shows an upper cut view of another embodiment of the cage with integrated springs applied to a torque transmission system and free wheel with rollers.

### Detailed description

As can be seen from the attached figures illustrating and integrating the present invention of a "Cage with Integrated Springs Applied to a Torque Transmission system and Free Wheel with Rollers", a device applied to torque transmission systems and free wheel with rollers, preferably used for starter drives, being the device comprised by a cage (1) with integrated springs (1A) made in one single part of plastic, steel or other material, provided with a ring (1B) with wavy external edges (1B1) which are fitted into the internal walls of the cam (A) and internal edges (1B2) serving as a base for roller movement (B). On the upper part of the ring, a set of prolongers (1C) is radially located, each one with a fixed support column (1C1) provided with a cavity (1C2) to fit in rollers (B) and a flexible curved wall or integrated spring (1A) to force the rollers (B) to return.

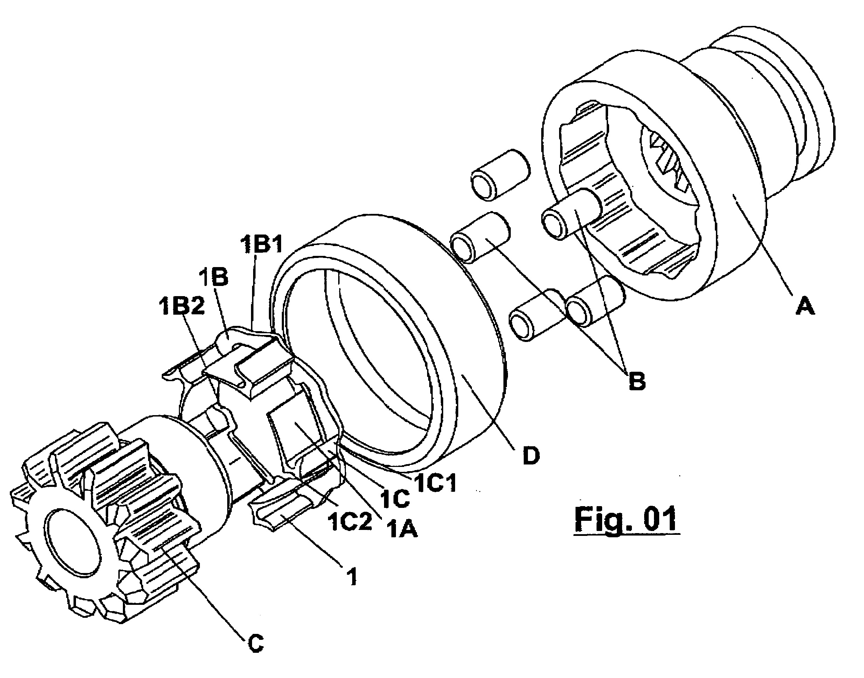

Figure 1 shows the cage (1) with integrated springs (1A), the ring (1B) with wavy external edges (1B1), internal edges (1B2), the set of prolongers (1C) with fixed support columns (1C1), cavities (1C2) and flexible curved walls or integrated spring (1A); and show other parts composing the transmission system as follows: the part composing the cam (A), rollers (B), pinion (C) and the involving cylindrical body (D).

The cage (1) with integrated springs (1A) is used to guarantee the correct position of rollers (B), as required to transmit the locking torque.

The condition of torque transmission occurs when rollers (B) are in contact positions with the internal race of the pinion (C) and cam (5). Within the period of time comprised between engine ignition and the disengagement of the starter drive, free wheel occurs, when the rotation of the pinion (C) is higher than the rest of the starter drive. On that moment, rollers (B) do not transmit torque to the combustion engine and exert force against the integrated springs (1A).

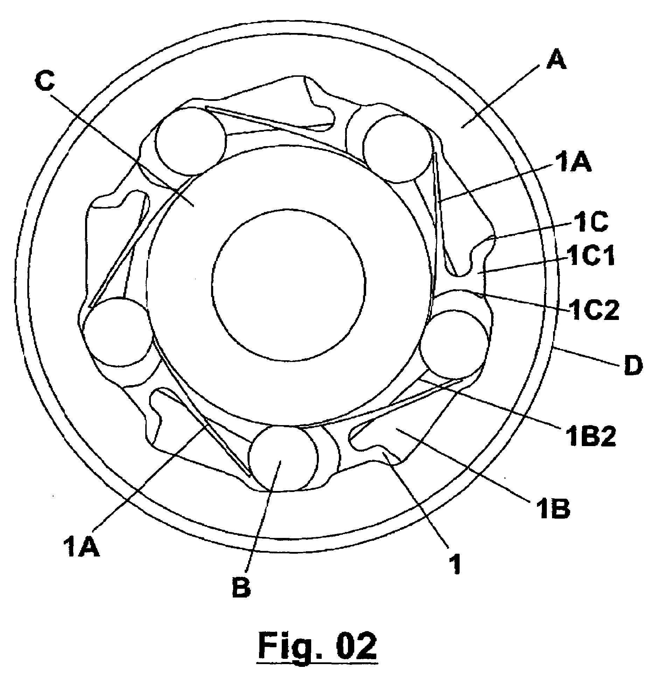

Figure 2 shows the cut view of the cage (1) with integrated springs (1A) as applied to the transmission system, which is composed by the cam (A), rollers (B), pinion (C) and the involving cylindrical embodiment (D).

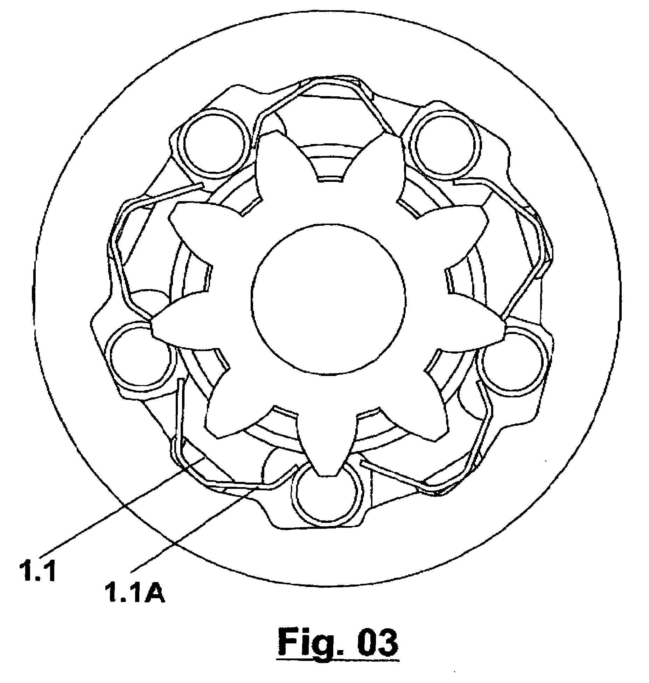

Figure 3 shows the cut view of a variant, showing a cage (1.1) with integrated springs (1.1A) in a different arrangement, as applied to the transmission system.

According to the embodiment, the cage (1) and integrated springs (1A) may have other shapes, sizes and embodiments to adapt them to current and future transmission systems with free wheel with rollers, preferably applied to starter drives, as long as the same integration characteristics of the present invention are maintained.

## Claims

1. "CAGE WITH INTEGRATED SPRINGS APPLIED TO A TORQUE TRANSMISSION SYSTEM AND FREE-WHEEL WITH ROLLERS", a device applied to torque transmission systems and free wheel with rollers, preferably used for starter drives of combustion engines being the device **characterized by** a cage (1) with integrated springs (1A) made in one single part of plastic, steel or other material.

2. "CAGE WITH INTEGRATED SPRINGS APPLIED TO A TORQUE TRANSMISSION SYSTEM AND FREE WHEEL WITH ROLLERS" of claim 1, **characterized by** the cage (1) being provided with a ring (1B) with wavy external edges (1B1) fitting into the internal walls of the came (A) and internal edges (1B2) serving as the base for the movement of rollers (B); on the upper side of the ring, a set of prolongers (1C) is radially located, each one with a fixed support column (1C1), provided with a cavity (1C2) to fit in rollers (B) and a flexible curved wall or integrated spring (1A) to force rollers (B) to return.

3. "CAGE WITH INTEGRATED SPRINGS APPLIED TO A TORQUE TRANSMISSION SYSTEM AND FREE WHEEL WITH ROLLERS" of claim 2, **characterized by** the cage (1) and integrated springs (1A) having other shapes, sizes and embodiments to adapt them to current and future transmission systems with free wheel with rollers, preferably applied to starter drives, as long as the same integration characteristics of the present invention are maintained.

4. "CAGE WITH INTEGRATED SPRINGS APPLIED TO A TORQUE TRANSMISSION SYSTEM AND FREE WHEEL WITH ROLLERS" of claim 3, **characterized by** the cage (1) with integrated springs (1A) being applied to any transmission system with free wheel with rollers.
